Europäisches Patentamt

European Patent Office

Office européen des brevets

(19)

(11) Veröffentlichungsnummer: **0 485 831 A1**

## (12) EUROPÄISCHE PATENTANMELDUNG

(21) Anmeldenummer: **91118714.4**

(22) Anmeldetag: **04.11.91**

(51) Int. Cl.5: **G01N 35/00**

(30) Priorität: **13.11.90 CH 3592/90**

(43) Veröffentlichungstag der Anmeldung:
**20.05.92 Patentblatt 92/21**

(84) Benannte Vertragsstaaten:
**CH DE FR GB IT LI NL**

(71) Anmelder: **F. HOFFMANN-LA ROCHE AG**
**Postfach 3255**
**CH-4002 Basel(CH)**

(72) Erfinder: **Bühler, Jürg**
**Schützenweidstrasse 12**
**CH-6023 Rothenburg(CH)**

(74) Vertreter: **Ventocilla, Abraham et al**
**Grenzacherstrasse 124 Postfach 3255**
**CH-4002 Basel(CH)**

(54) **Automatisches Analysengerät.**

(57) Automatisches Analysengerät (11), mit dem eine Vielzahl von biologischen Proben untersucht werden.

Zur Erhöhung der Zahl von Proben, die mit dem Analysengerät pro Zeiteinheit untersucht werden können, ist dieses dadurch gekennzeichnet, dass es
a) einen Raum (12) hat, in dem eine Vielzahl von Behälterträgern (13, 14, 15) angeordnet werden können, die je eine Vielzahl von Probenbehältern, Reaktionsbehältern oder Behältern mit anderen, zur Durchführung der Analysen verwendeten Flüssigkeiten tragen, und
b) eine sichtbare Anzeige des jeweiligen Bearbeitungszustands von wenigstens einigen der Behälterträger (13, 14, 15) enthält, wobei die Anzeige mehrere Anzeigeeinheiten (23, 24) enthält und jede Anzeigeeinheit dazu geeignet ist, mehr als zwei verschiedene Bearbeitungszustände eines ihr zugeordneten Behälterträgers sichtbar zu machen.

Fig. 1

EP 0 485 831 A1

Die Erfindung betrifft ein automatisches Analysengerät, mit dem eine Vielzahl von biologischen Proben untersucht wird, insbesondere ein Analysengerät, das in einem medizinischen Diagnostiklabor verwendet wird.

In bisher bekannten Analysengeräten dieser Art wird eine Gruppe von Probenbehältern, die die zu untersuchenden biologischen Proben enthalten, von einem Träger getragen, der im Analysengerät angeordnet wird. Eine Beladung des Analysengeräts mit einer neuen Gruppe von Probenbehältern ist erst dann möglich, wenn ein ganzer Arbeitszyklus beendet ist, d.h. wenn die zur Untersuchung sämtlicher Proben der vorhergehenden Gruppe erforderlichen Verfahrenschritte durchgeführt worden sind und das Analysengerät wieder bereit ist, eine neue Gruppe von Proben zu untersuchen. Dieses Vorgehen begrenzt die Zahl der Proben, die mit dem Analysengerät pro Zeiteinheit untersucht werden können. Es ist jedoch erwünscht, diese Zahl zu erhöhen, um eine bessere Nutzung des Analysengeräts zu erreichen.

Der Erfindung liegt daher die Aufgabe zugrunde, ein Analysengerät bereit zu stellen, mit dem eine höhere Zahl von Proben pro Zeiteinheit untersucht werden können.

Erfindungsgemäss wird diese Aufgabe mit einem automatischen Analysengerät gelöst, welches dadurch gekennzeichnet ist, dass es

a) einen Raum hat, in dem eine Vielzahl von Behälterträgern angeordnet werden können, die je eine Vielzahl von Probenbehältern , Reaktionsbehältern oder Behältern mit anderen, zur Durchführung der Analysen verwendeten Flüssigkeiten tragen, und

b) eine sichtbare Anzeige des jeweiligen Bearbeitungszustands von wenigstens einigen der Behälterträger enthält, wobei die Anzeige mehrere Anzeigeeinheiten enthält und jede Anzeigeeinheit dazu geeignet ist, mehr als zwei verschiedene Bearbeitungszustände eines ihr zugeordneten Behälterträgers sichtbar zu machen.

Der wesentliche Vorteil des erfindungsgemässen Analysengeräts ist, dass Gruppen von Behältern, die bereits bearbeitet und im Analysengerät nicht mehr benötigt werden, laufend durch neue, zu bearbeitende Gruppen von Behältern während des Betriebs des Analysengerätes ersetzt werden können. Dies wird im wesentlichen durch eine Aufteilung der im Analysengerät enthaltenen Behälter in Gruppen, wobei jede Gruppe von einem Behälterträger getragen wird, und durch eine ständige Anzeige des jeweiligen Bearbeitungszustands der Behälterträger erreicht. Sobald die Bearbeitung sämtlicher Behälter eines Behälterträgers beendet ist, wird dies durch die entsprechende Anzeige signalisiert, und der bereits bearbeitete Behälterträger kann durch einen noch zu bearbeitenden Behälterträger ersetzt werden, auch wenn die Bearbeitung der Probenbehälter in den anderen Behälterträgern noch im Gang ist. Auf diese Weise wird eine Erhöhung der Zahl der pro Zeiteinheit im Analysengerät untersuchten Proben erzielt.

Ein Ausführungsbeispiel der Erfindung wird im folgenden anhand der beiliegenden Zeichnungen beschrieben. Es zeigen:

Fig. 1     eine erste schematische, perspektivische Teilansicht eines erfindungsgemässen Analysengeräts 11,

Fig. 2     eine perspektivische Ansicht des Behälterträgers 13 in Fig. 1 und der von ihm getragenen Probenbehälter,

Fig. 3-5     drei verschiedene Zustände der Anzeigeeinheit 23 in Fig. 1

Fig. 6     eine zweite schematische, perspektivische Teilansicht des erfindungsgemässen Analysengeräts 11 gemäss Fig. 1,

Fig. 7     eine perspektivische Ansicht des Behälterträgers 53 in Fig. 6 und der von ihm getragenen Reaktionsbehälter.

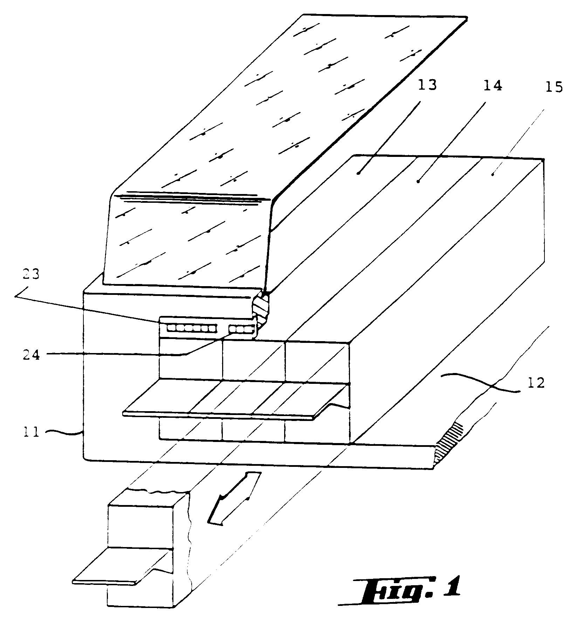

Die Fig. 1 zeigt eine erste schematische, perspektivische Teilansicht eines erfindungsgemässen, automatischen Analysengerätes 11, mit dem eine Vielzahl von biologischen Proben untersucht werden. Das Analysengerät 11 hat einen Raum 12, in dem eine Vielzahl von Behälterträgern 13, 14, 15, etc. auf eine Fläche eines stillstehenden Teils des Analysengerätes 11 angeordnet werden können. Jeder Behälterträger trägt eine Vielzahl von Probenbehälter. Das Analysengerät 11 enthält ausserdem eine sichtbare Anzeige des jeweiligen Bearbeitungszustands von wenigstens einigen der Behälterträger. Die Anzeige enthält mehrere Anzeigeeinheiten 23, 24. Jede dieser Anzeigeeinheiten kann mehr als zwei verschiedene Bearbeitungszustände eines ihr zugeordneten Behälterträgers sichtbar machen. Vorzugsweise enthält das Analysengerät eine sichtbare Anzeige des jeweiligen Bearbeitungszustands von jedem der Behälterträger.

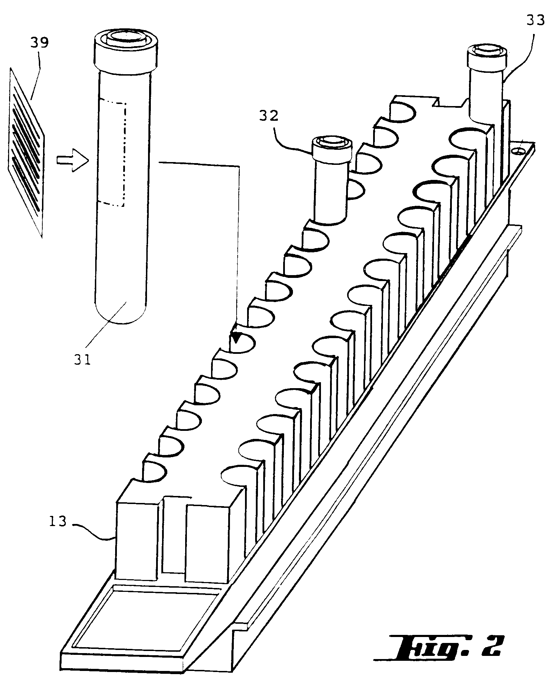

Fig. 2 zeigt eine perspektivische Ansicht des Behälterträgers 13 in Fig. 1 und von einigen der von ihm getragenen Probenbehälter 31-33. Ein solcher Behälterträger kann z.B. 30 Probenbehälter tragen. Jeder Behälter ist mit einer maschinenlesbaren Kennzeichnung 39 versehen.

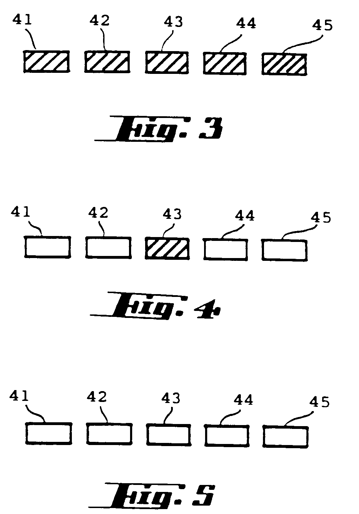

Figuren 3-5 zeigen verschiedene Zustände einer der Anzeigeeinheiten 23, 24 in Fig. 1, z.B. der Anzeigeeinheit 23. Eine solche Anzeigeeinheit besteht z.B. aus fünf Anzeigeelementen 41-45, die z.B. lichtemittierende Dioden (LED) oder Anzeigelampen sind.

In Fig. 3 wird der Zustand dargestellt, in dem alle fünf Anzeigeelemente 41-45 der Anzeigeeinheit 23 sich in einem aktiven Zustand befinden, indem z.B. alle Anzeigelampen brennen. Durch diesen Zustand der Anzeigeeinheit 23 wird signalisiert, dass sich der entsprechende Behälterträger 13 in Bearbeitung befindet und deshalb nicht entfernt werden darf. Dies ist z.B. während der Identifikation der Probenbehälter oder während der Pipettierung von Proben aus den vom Behälterträger 13 getragenen Probenbehältern.

In Fig. 4 wird der Zustand dargestellt, in dem nur das Anzeigeelement 43 der Anzeigeeinheit 23 sich in einem aktiven Zustand befindet. Durch diesen Zustand der Anzeigeeinheit 23 wird signalisiert, dass sich der entsprechende Behälterträger 13 nicht in Bearbeitung befindet, dass er aber voraussichtlich noch bearbeitet wird und deshalb vorzugsweise nicht entfernt werden sollte. Dies ist z.B. zwischen dem Ende der Identifikation der Probenbehälter und dem Anfang der Pipettierung von Proben aus den vom Behälterträger 13 getragenen Probenbehältern, oder zwischen dem Ende der soeben erwähnten Pipettierung von Proben und der Ausgabe der Messergebnisse, der Fall.

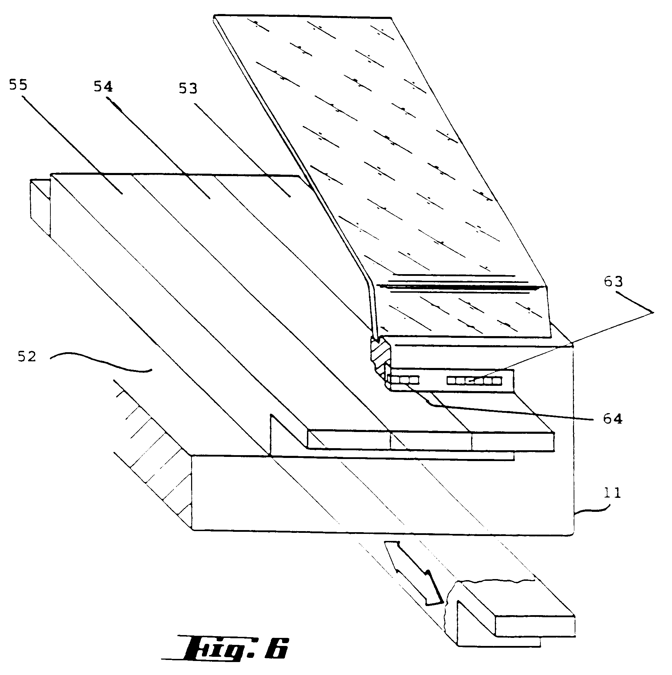

In Fig. 5 wird der Zustand dargestellt, in dem keines der Anzeigeelemente 41-45 der Anzeigeeinheit 23 sich in einem aktiven Zustand befindet. Durch diesen Zustand der Anzeigeeinheit 23 wird signalisiert, dass die Bearbeitung des entsprechenden Behälterträgers 13 bendet ist und deshalb dieser vom Benutzer entfernt bzw. durch einen anderen Behälterträger ersetzt werden darf, oder dass in der für den entsprechenden Behälterträger vorgesehenen Position im Analysengerät kein Behälterträger vorhanden ist.

Die Fig. 6 zeigt eine zweite schematische, perspektivische Teilansicht des erfindungsgemässen, automatischen Analysengerätes 11 gemäss Fig. 1. Wie aus der Fig. 6 ersichtlich, hat das Analysengerät 11 einen Raum 52, in dem eine Vielzahl von Behälterträgern 53, 54, 55, etc. auf eine Fläche eines stillstehenden Teils des Analysengerätes 11 angeordnet werden können. Jeder Behälterträger trägt eine Vielzahl von Reaktionsbehältern. Das Analysengerät 11 enthält ausserdem eine sichtbare Anzeige des jeweiligen Bearbeitungszustands von wenigstens einigen der Behälterträger . Die Anzeige enthält mehrere Anzeigeeinheiten 63, 64. Jede dieser Anzeigeeinheiten kann mehr als zwei verschiedene Bearbeitungszustände eines ihr zugeordneten Behälterträgers sichtbar machen. Vorzugsweise enthält das Analysengerät eine sichtbare Anzeige des jeweiligen Bearbeitungszustands von jedem der Behälterträger.

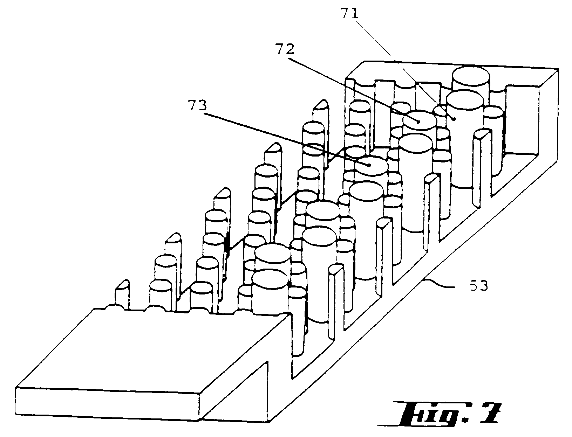

Fig. 7 zeigt eine perspektivische Ansicht des Behälterträgers 53 in Fig. 6 und von einigen der von ihm getragenen Reaktionsbehälter 71-73.

Die Funktion der Anzeigeeinheitn 63, 64 in Fig. 6 ist analog wie oben für die Anzeigeeinheit 23 in Fig. 1 beschrieben.

## Patentansprüche

1. Automatisches Analysengerät (11), mit dem eine Vielzahl von biologischen Proben untersucht werden, dadurch gekennzeichnet, dass es

a) einen Raum (12) hat, in dem eine Vielzahl von Behälterträgern (13, 14, 15) angeordnet werden können, die je eine Vielzahl von Probenbehältern, Reaktionsbehältern oder Behältern mit anderen, zur Durchführung der Analysen verwendeten Flüssigkeiten tragen, und

b) eine sichtbare Anzeige des jeweiligen Bearbeitungszustands von wenigstens einigen der Behälterträger (13, 14, 15) enthält, wobei die Anzeige mehrere Anzeigeeinheiten (23, 24) enthält und jede Anzeigeeinheit dazu geeignet ist, mehr als zwei verschiedene Bearbeitungszustände eines ihr zugeordneten Behälterträgers sichtbar zu machen.

**Fig. 1**

*Fig. 2*

**Fig. 3**

**Fig. 4.**

**Fig. 5**

**Fig. 6**

55
54
53
63
52
64
11

Fig: 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 356 250 (EASTMAN KODAK CO.) <br> * Spalte 7, Zeile 40 - Zeile 44 * <br> --- | 1 | G01N35/00 |
| A | US-A-3 775 595 (T.A. ROSSE ET AL.) <br> * Spalte 3, Zeile 66 - Spalte 4, Zeile 36 * <br> --- | 1 | |
| A | EP-A-0 350 049 (K.K TOSHIBA) <br><br> ----- | | |

RECHERCHIERTE SACHGEBIETE (Int. Cl.5)

G01N

Der vorliegende Recherchenbericht wurde für alle Patentansprüche erstellt

| Recherchenort | Abschlußdatum der Recherche | Prüfer |
|---|---|---|
| DEN HAAG | 06 FEBRUAR 1992 | HODSON C.M. |